# EUROPÄISCHE PATENTANMELDUNG

(11) **EP 4 464 904 A1**
(43) Veröffentlichungstag der Anmeldung: **20.11.2024**
(21) Anmeldenummer: 24155784.2
(22) Anmeldetag: 05.02.2024
(51) Int. Cl.: F16B 33/00

(54) **KORROSIONSSCHUTZELEMENT FÜR BAUTEILANSCHLÜSSE**

(30) Priorität: 19.05.2023 DE 202023102778 U
(71) Anmelder: Nießing Anlagenbau GmbH, 46325 Borken (DE)
(72) Erfinder: Hadder, Alexander, 46325 Borken (DE); Katemann, Andreas, 46325 Borken (DE); Flasche, Frank, 46325 Borken (DE); Schweers, Lukas, 46325 Borken (DE)
(74) Vertreter: Patentanwälte Olbricht Buchhold Keulertz

(57) **Zusammenfassung**

Vorgeschlagen wird ein Korrosionsschutzelement (1) für Bauteilanschlüsse (20), mit einem Elementkörper, wobei der Elementkörper dazu konfiguriert ist, ein statisch belastbares Bauteil des Bauteilanschlusses (20) zu bilden, und wobei der Elementkörper eine Ausnehmung (6), einen Auslass (14), einen Einlass (15) und einen Injektionskanal (16) aufweist, wobei die Ausnehmung (6) durch eine als Innenfläche (17) bezeichnete Wandung des Elementkörpers gebildet ist und dazu bestimmt ist, einen Bauteilanker zumindest abschnittsweise zu umgeben, und wobei der Auslass (14) in der Ausnehmung (6) und der Einlass (15) außerhalb der Ausnehmung (6) in einer Außenfläche (18) des Elementkörpers mündet, und wobei der Injektionskanal (16) den Auslass (14) mit dem Einlass (15) für ein Schutzmittel durchströmungswirksam verbindet. Weiterhin wird eine Anschlussanordnung eines Bauteilanschlusses (20) mit einem Korrosionsschutzelement (1) vorgeschlagen.

## Beschreibung

Die Erfindung betrifft eine Vorrichtung für den Korrosionsschutz von Bauteilanschlüssen nach den Merkmalen des Anspruchs 1.

Die Korrosion von Bauteilen ist ein hinlänglich bekanntes Problem. Diverse Medien mit einem korrosivem Potential, insbesondere (Regen-)Wasser, Umgebungsluft - vornehmlich in Verbindung mit weiteren Subtanzen - oder dergleichen, nachfolgend zusammenfassend als Medien bezeichnet, führen bei einer fortdauernden Exposition zu Festigkeitsverlusten der Bauteile, so dass beispielsweise die Standsicherheit von Bauwerken beeinträchtigt werden kann. Regelmäßig sind Verbindungs- beziehungsweise Verankerungsbereiche - nachfolgend zusammenfassend als (Bauteil-)Anschluss bezeichnet, in denen separate Bauteile regelmäßig statisch wirksam, das heißt kraftübertragungswirksam miteinander verbunden werden, besonders korrosionssensibel, und zwar aus mehreren Perspektiven: erstens weisen die Anschlüsse regelmäßig eine Konstruktion auf, welche die Korrosion begünstigt, beispielsweise indem korrosionsfördernde Bedingungen in einem Bauraum länger aufrechterhalten werden. Zweitens kann ein Versagen dieser Bauteile zu ernsthaften Konsequenzen führen, so dass entsprechende Bereiche besonders vor Korrosion geschützt und regelmäßig kontrolliert werden müssen.

Ein derartig korrosionssensibler Anschluss liegt beispielsweise im Verankerungsbereich eines Stahlturms vor, wie bei einem Stahlschornstein oder dergleichen. Im Allgemeinen lastet ein Stahlturm auf einem Betonfundament. In das Fundament einbetoniert sind Anker, welche in das Lager des Stahlturms eingeführt werden und über die der Stahlturm mittels Befestigungselement an dem Fundament zugfest gehalten beziehungsweise mit dem Fundament verspannt wird.

Als Anker verbreitet sind Gewindestangen, welche in Verbindung mit einer Mutter als Befestigungselement zur Ausbildung eines statisch belastbaren Anschlusses dienen. Das Lager weist dazu ein oder mehrere Ausnehmungen auf, welche nach dem Einführen des jeweiligen Ankers diesen zumindest teilweise umgeben. Vornehmlich für die Montage großdimensionierter Bauteile, wie die Abschnitte eines Stahlschornsteins, sind gewisse Maßtoleranzen praxisrelevant, um die Anker auf einfache Weise baustellenseitig in die Lager einführen zu können. Unter anderem infolge dieser Maßtoleranzen wird jeweils zwischen einem Anker und der die Ausnehmung schaffenden Wandung ein Zwischenraum geschaffen, welcher ein Medienmilieu begünstigt, das Korrosionserscheinungen an den Bauteilen hervorrufen kann. Der Zwischenraum kann sich weiterhin bis in das Fundament erstrecken, sofern beispielsweise der Anker zumindest abschnittsweise nicht unmittelbar einem Betonwerkstoff anliegt.

Üblicherweise wirken Muttern als Befestigungsmittel unmittelbar auf Unterlegscheiben, welche die Spannkraft der Verschraubung auf das Lager übertragen. Da die Unterlegscheiben unabhängig von den Lager mit dem Anker in Verbindung gebracht werden, können die Maßtoleranzen geringer sein, infolgedessen ebenso der Zwischenraum im Bereich der Unterlegscheibe kleiner ist als im Bereich des Lagers.

Aus der Praxis ist bekannt, den Zwischenraum mit einem Korrosionsschutzmittel zu füllen, nachfolgend als Schutzmittel bezeichnet, und zwar bevor die feste Verbindung geschaffen wird, insbesondere bevor eine Schraubverbindung angezogen wird, das heißt bevor der statisch belastbare Anschluss bereitgestellt wird, um einerseits den Zugang von Medien in den Zwischenraum zu erschweren beziehungsweisegänzlich zu verhindern. Etwaige gasgefüllte Hohlräume im Zwischenraum werden durch ein Schutzmittel ausgefüllt und stehen den Medien nicht mehr zur Verfügung. Andererseits können mittels Schutzmittel bereits eingetretene Medien verdrängt und aus dem Zwischenraum ausgetrieben werden. Als Korrosionsschutzmittel kommen dabei insbesondere Fette, Wachse oder Ähnliches zum Einsatz.

Die Kontrolle der Bauteilsicherheit ist im Grundsatz normativ vorgegeben. Im Allgemeinen wird verlangt, dass entsprechende Anschlüsse in regelmäßigem Turnus kontrolliert werden. Das zuvor erörterte Beispiel einer Stahlschornsteinverankerung wird in der Praxis grundsätzlich alle zwei Jahre einer Kontrolle unterzogen. Im Allgemeinen wird bei einer Kontrolle erstens ein etwaiger Korrosionsfortschritt bewertet. Zweitens wird ein etwaiger Korrosionsschutzmittelverlust ausgeglichen, in dem der Zwischenraum erneut mit einem Korrosionsschutzmittel befüllt wird.

Problematisch ist, dass die Zwischenräume regelmäßig nicht unmittelbar einsehbar sind und regelmäßig nicht zugänglich sind, so dass keine Revisionsmöglichkeit besteht. In der Praxis müssen daher Schraubverbindungen oder dergleichen zunächst gelöst werden unter Beeinträchtigung der Verbindungsfestigkeit, um beispielsweise Korrosionsschutzmittel nachfüllen zu können.

Der vorliegenden Erfindung liegt die Aufgabe zugrunde, eine Lösung für einen verbesserten Korrosionsschutz eines Anschlusses vorzuschlagen, wobei insbesondere die Revisionsmöglichkeiten des Anschlusses vereinfacht werden sollen.

Gelöst wird die Aufgabe durch ein Korrosionsschutzelement nach den Merkmalen des Anspruchs 1. Merkmale der Erfindung werden nachfolgend erörtert, wobei vorteilhafte Ausgestaltungen der Erfindung unter anderem in den Unteransprüchen beschrieben werden.

Diese Gestaltungsmerkmale können im Zusammenhang mit der Erfindung verwirklicht werden oder auch unabhängig von der Erfindung eigenständig erfinderisch sein, und sie können entweder einzeln und unabhängig voneinander oder auch in einer beliebigen Kombination verwirklicht werden, einschließlich der Verwirklichung sämtlicher genannter Merkmale, sofern eine Kombination nicht ausdrücklich oder technisch zwingend ausgeschlossen ist.

Gemäß einem ersten Aspekt schlägt die Erfindung mit anderen Worten vor, mittels Korrosionsschutzelement einen dauerhaften Zugang in den Zwischenraum eines Anschlusses zu schaffen, ohne dafür ein Befestigungselement oder dergleichen zuvor lösen zu müssen.

Der Elementkörper des Korrosionsschutzelements ist vorschlagsgemäß dazu konfiguriert, langfristig - über die eigentliche Montagezeit des Anschlusses hinausgehend - ein statisch belastbares Bauteil des Anschlusses zu bilden, in der Art, dass auch während des Einbringens eines Schutzmittels Kräfte von einem Bauwerk über den jeweiligen Anschluss in das Fundament eingeleitet werden können. Vorteilhaft kann das Korrosionsschutzelement Metall aufweisen, insbesondere Stahl oder dergleichen.

Das Korrosionsschutzelement kann bei der Montage eines Anschlusses beispielsweise in Art einer Unterlegscheibe verwendet werden und sorgt auf diese Weise erstens für eine gleichmäßige Verteilung einer Vorspannkraft auf eine Grundplatte der Verankerungskonstruktion. Zweitens kann mittels Korrosionsschutzelement ein flächiger und wahlweise erneuerbarer Korrosionsschutz des Anschlusses bereitgestellt werden, indem gegebenenfalls (neue) Hohlräume im Zwischenraum durch ein Schutzmittel bedarfsabhängig wieder ausgefüllt werden können.

Dadurch, dass das Korrosionsschutzelement ein verbleibendes Bauteil des Bauteilanschlusses bildet, kann in besonders vorteilhafter Weise sichergestellt werden, dass erstens im Wesentlichen sämtliche Hohlräume im Zwischenraum mit einem Schutzmittel gefüllt werden, wobei beispielsweise ein sichtbarer Austritt des Schutzmittels die intendierte Füllung signalisieren kann. Müsste das Korrosionsschutzelement demgegenüber nach einer Schutzmittelinjektion wieder rückgebaut werden, könnte nicht sichergestellt werden, dass später nach Herstellung des endgültigen Anschlusses beispielsweise durch neuerlich eingetretene Luft im Wesentlichen noch immer sämtliche Hohlräume mit einem Schutzmittel gefüllt sind.

Zweitens kann durch die obsolete Demontage des Korrosionsschutzelements sichergestellt werden, dass bestimmte Bereiche beziehungsweise Bauteile des Anschlusses nicht unbeabsichtigt mit einem Schutzmittel verunreinigt werden, beispielsweise die Angriffsflächen eines Schraubgewindes zwischen Anker und Befestigungselement. Schutzmittel an etwaigen Angriffsflächen kann insoweit eine Verunreinigung darstellen, als dass beispielsweise das Schutzmittel beim Anziehen des Befestigungselements dem Erreichen eines festgelegten Anzugsmoments entgegenwirken kann.

Vorschlagsgemäß weist das Korrosionsschutzelement einen Injektionskanal auf, welcher in einem Auslass in den Zwischenraum mündet. Schutzmittel kann nunmehr durch den Kanal in den Zwischenraum injiziert und dieser damit gefüllt werden. Wann der Zwischenraum vollständig gefüllt ist, kann ein Handhabender auf einfache Weise beispielsweise dadurch erkennen, dass Schutzmittel aus dem Zwischenraum durch kleine Öffnungen zwischen den Bauteilen sichtbar austritt oder dadurch, dass der Druck vergleichsweise erhöht werden muss, um weiteres Schutzmittel injizieren zu können. Die vorliegende Erfindung ist besonders vorteilhaft, als dass das Korrosionsschutzelement für eine Nachrüstung geeignet ist, sodass auch für bereits bestehende Anschlüsse eine Vereinfachung des Korrosionsschutzes verwirklicht werden kann.

In der Praxis weit verbreitet sind insbesondere Gewindestangen als Anker, sodass eine Ausnehmung im Elementkörper des Korrosionsschutzelements vorzugsweise als Durchgangsbohrung mit einem kreisrunden Querschnitt ausgestaltet sein kann. Die als Innenfläche bezeichnete, die Durchgangsbohrung bildende Wandung umgibt die Gewindestange vollumfänglich und begrenzt den Zwischenraum, wobei der Zwischenraum durch das Korrosionsschutzelement vergrößert ist und die Gewindestange aus dem Korrosionsschutzelement herausragt zur Aufnahme eines Befestigungsmittels.

Der vorschlagsgemäße Elementkörper kann beispielsweise als Druckhülse ausgestaltet sein, wobei die Stirnseiten Auflagebeziehungsweise Anlageflächen bilden, welche einerseits einem Befestigungsmittel und andererseits einem Lager eines Bauteils anliegen können. Die Innenseite der Druckhülse wird durch eine innere Mantelfläche beziehungsweise die Innenfläche geschaffen. Radial außen ist dieser gegenüberliegend auf der Außenseite eine äußere Mantelfläche angeordnet, und zwar im Abstand der Auflagefläche. Alternativ kann vorgesehen sein, dass der Elementkörper als Druckplatte mit einer Ober- und einer Unterseite ausgestaltet ist, wobei auf der Außenseite Ober- und Unterseite im Wesentlichen die Anlageflächen bilden können.

Im Kontext der vorliegenden Erfindung wird mit dem Begriff beziehungsweise dem Präfix "innen" ein Merkmal indiziert, welches in einer Anschlussanordnung dem Zwischenraum zugewandt ausgerichtet ist. Demgegenüber indiziert der Begriff beziehungsweise das Präfix "außen" ein Merkmal, welches in einer Anschlussanordnung vom Zwischenraum abgewandt ausgerichtet ist.

Weiterhin indizieren die Begriffe beziehungsweise die Präfixe "oben" und "unten" im Kontext der Erfindung jeweils eine Ausrichtung eines Merkmals, wobei "unten" eine Ausrichtung im Wesentlichen in Wirkrichtung der Gravitation betrifft und "oben" eine im Wesentlichen dazu entgegengesetzte Ausrichtung.

Insbesondere für eine Druckhülse als Elementkörper kann sich besonders vorteilhaft der Injektionskanal vom Auslass im Wesentlichen in radialer Richtung zum Einlass erstrecken, da eine derartige Ausrichtung auf einfache Weise beispielsweise mittels Bohrung geschaffen werden kann. Grundsätzlich kann alternativ oder zusätzlich eine abweichende Ausrichtung eines Injektionskanals vorgesehen sein, beispielsweise schaffend einen Injektionskanal, der sich von der Ausnehmung zu einer Außenseite beziehungsweise zu einer Auflagefläche erstreckt. Dies ist insbesondere dann vorteilhaft, sofern beispielsweise die Auflagefläche besser zugänglich ist als eine äußere Mantelfläche oder Ähnliches.

In einer Weiterbildung der Erfindung kann ein Kanalstutzen am Einlass angeordnet sein, welcher den Injektionskanal nach außen verlängert. Dieser Stutzen kann dazu genutzt werden, eine durchströmungswirksame Verbindung zu schaffen zwischen dem Korrosionsschutzelement und dem Reservoir eines Schutzmittels. Vorzugsweise weist der Stutzen am dem Einlass des Korrosionsschutzelements gegenüberliegenden Ende eine konische Verjüngung des Querschnitts zum Ende des Stutzens auf, so das beispielsweise Schläuche oder Ähnliches vereinfacht auf den Stutzen aufgeschoben werden können.

Besonders vorteilhaft kann der Kanalstutzen bei einer Druckhülse in der äußeren Mantelfläche angeordnet sein, und zwar in radialer Erstreckung eines entsprechend ausgerichteten Injektionskanals.

Vorteilhaft kann der Kanalstutzen ein Rückschlagventil aufweisen, welches einem Rückfluss des zugeführten Schutzmittels entgegenwirkt. Infolgedessen kann sichergestellt werden, dass das Schutzmittel nicht unbeabsichtigt aus dem Zwischenraum entweicht, sodass wirtschaftlich vorteilhaft Wartungsintervalle verlängert werden können.

Regelmäßig kann darauf verzichtet werden, dass das Korrosionsschutzelement eine separate Öffnung oder dergleichen aufweist, welche durchlässig ist für das Schutzmittel. Eine entsprechend durchlässige, separate Öffnung wäre von Nachteil, als dass beispielsweise eine Signalisierung der vollständigen Füllung erschwert wird.

Vorteilhaft kann eine Entgasungsöffnung vorgesehen sein, um durch das Schutzmittel verdrängte Gase, und vorzugsweise auch Flüssigkeiten, aus dem Zwischenraum abführen zu können. Besonders bevorzugt weist die Entgasungsöffnung ein Ventil oder Ähnliches auf, so dass die Entgasungsöffnung für Gase und/oder Flüssigkeiten durchströmbar ist, im Wesentlichen jedoch nicht für das eingebrachte, regemäßig hochviskose Schutzmittel. In der Praxis weisen die Bauteile eines Anschlusses häufig Unebenheiten auf, so dass zwei benachbarte Bauteile nicht vollflächig exakt einander anliegen. Die Unebenheiten können Kanäle oder dergleichen schaffen, durch welche einerseits Schutzmittel aus dem Zwischenraum austreten kann, und andererseits durch welche Medien in den Zwischenraum erst eintreten können.

Für eine besonders erfinderische Weiterentwicklung kann der Kanalstutzen als Schmierstutzen, in der Praxis auch als Schmier- oder Fettnippel bezeichnet, ausgestaltet sein, welcher wahlweise mit einem Rückschlagventil versehen sein kann. Ein Schmierstutzen hat den Vorteil, dass dieser mit den in der Praxis weit verbreiteten Fettpressen als Reservoir und Zuführeinrichtung für Schutzmittel verbunden werden kann. Das vorgeschlagene Korrosionsschutzelement kann dadurch universell eingesetzt werden und erfordert nicht die Anschaffung besonderer Werkzeuge oder dergleichen.

Weiterhin kann vorgesehen sein, dass das Korrosionsschutzelement in dem Einlass beziehungsweise in Abschnitten des Injektionskanals ein Gewinde aufweist, welches mit einem Gewinde eines Kanalstutzens beziehungsweise eines Schmierstutzens korrespondiert. Mittels Schraubverbindung kann somit der Kanal- beziehungsweise Schmierstutzen mit dem Korrosionsschutzelement wahlweise lösbar verbunden werden, was beispielsweise für den Austausch eines defekten Stutzens von Vorteil ist oder um eine alternative Verbindungsmöglichkeit mit weiteren Reservoirs zur Schutzmittelversorgung schaffen zu können.

Im Sinne einer zusätzlichen Vereinfachung kann in einer besonders erfinderischen Weiterentwicklung das Korrosionsschutzelement als Befestigungselement fungieren. Dafür kann in der Innenfläche zumindest abschnittsweise ein Innengewinde vorgesehen sein, welches beispielsweise mit dem Gewinde eines Ankers korrespondiert. Zur Herstellung des Anschlusses wird das Korrosionsschutzelement zunächst aufgeschraubt bis eine beabsichtigte Spannkraft erreicht ist. Anschließend wird über dasselbe Korrosionsschutzelement ein Schutzmittel in den Zwischenraum injiziert. Demzufolge kann dadurch auf ein zusätzliches Bauteil verzichtet werden, was zum einen den erforderlichen Bauraum des Anschlusses und zum anderen die Kosten reduziert.

Zusätzlich kann ein schraubbares Korrosionsschutzelement einen Abschnitt in Art einer Unterlegscheibe aufweisen, um die durch die Verschraubung aufgebrachte Spannkraft mit einer größeren Fläche in das Lager einleiten zu können. Dabei kann ein besonderes Augenmerk auf die Maßtoleranzen gerichtet werden, als dass diese für das Korrosionsschutzelement selbst für die Montage minimiert werden können, wodurch das Gesamtvolumen des Zwischenraums umfassend den Zwischenraum im Lagerbereich sowie den Zwischenraum im Bereich des Korrosionsschutzelementes verkleinert wird. Erstens kann ein kleinerer Zwischenraum nur einer vergleichsweise geringeren Menge Medien zur Verfügung stehen, sodass das Korrosionsrisiko herabgesetzt wird. Zweitens wird die für eine Zwischenraumbefüllung erforderliche Schutzmittelmenge ressourcenschonend verringert.

Weiterhin kann eine konische Außenfläche des Elementkörpers vorgesehen sein, und zwar bevorzugt eine zumindest abschnittsweise konisch ausgestaltete Außenfläche. Insbesondere eine Oberseite beziehungsweise eine obere Stirnfläche kann eine konische Ausschnittsfläche ausbilden. Eine konische Ausgestaltung begünstigt das Abführen von potentiell korrosiven Medien vom Zwischenraum. Vorteilhaft wird bei der Ausgestaltung der konischen Außenfläche eine vorspannungsbedingte Verformung des Elementkörpers im Anschluss berücksichtigt, indem beispielsweise die Konizität stets stärker ausgeprägt ist, als eine etwaige, der Konizität entgegenwirkende Schüsselung beziehungsweise Verformung des Elementkörpers.

Eine besonders vorteilhafte Weiterentwicklung betrifft eine Anzahl von Nuten, welche sich in die Ober- und / oder Unterseite der Außenseite des Elementkörpers öffnen kann. Bevorzugt kann in die Anzahl Nuten jeweils ein Versorgungskanal münden, durch welchen Schutzmittel in die Anzahl Nuten eingebracht werden kann. In Gebrauchsstellung, das heißt in einer Anschlussanordnung ist die Öffnung der Anzahl Nuten jeweils einem weiteren Bauteil zugewandt, beispielsweise auf der Unterseite einer Lastverteilungsplatte eines Lagers. Nut und Lastverteilungsplatte schaffen zumindest annähernd einen Kanal, welcher vorteilhaft mit einem Schutzmittel im Wesentlichen gefüllt wird, so dass eine zusätzliche Barriere geschaffen werden kann, die das Eindringen von Medien in den Zwischenraum erschweren kann.

Unter einer Anzahl ist im Kontext der vorgestellten Erfindung eine Einzahl oder Mehrzahl eines entsprechenden Merkmals zu verstehen.

Der Versorgungskanal kann beispielsweise eine Nut durchströmungswirksam mit dem Zwischenraum verbinden, so dass Schutzmittel, welches in den Zwischenraum gepresst wird, aus dem Zwischenraum über den Versorgungskanal in eine Nut eingebracht werden kann. Weiterhin kann vorgesehen sein, dass ein Versorgungskanal den Injektionskanal mit der Nut durchströmungswirksam verbindet, so dass Schutzmittel über den Injektionskanal und den Versorgungskanal in eine Nut eingebracht werden kann.

Ein zweiter Aspekt der Erfindung betrifft eine Anschlussanordnung separater Bauteile. Dafür weist ein erstes Bauteil einen Anker und ein zweites Bauteil eine Ausnehmung auf. Im Verbindungs- beziehungsweise Verankerungsbereich umgibt die Ausnehmung den Anker zumindest abschnittsweise und ein Befestigungselement schafft eine zugfeste Verbindung zwischen dem ersten und dem zweiten Bauteil. Erfindungswesentlich ist, dass ein Korrosionsschutzelement dem Lager anliegt, sodass Schutzmittel aus dem Zwischenraum im Bereich des Korrosionsschutzelementes in den Zwischenraum des Lagerbereichs injizierbar ist.

Vorteilhafterweise kann vorgesehen sein, dass das Korrosionsschutzelement zwischen einem Befestigungselement, beispielsweise einer Mutter samt Unterlegscheibe, und dem Lager eines Bauteils angeordnet ist. Bei einer Injektion kann das Schutzmittel sowohl in den Zwischenraum im Bereich des Lagers injiziert werden - wie zuvor beschrieben, als auch in den Zwischenraum im Bereich des Befestigungselements, beispielsweise in für das Schutzmittel zugängliche Gewindegänge. Letztendlich wird dadurch ein umfassender Korrosionsschutz des Anschlusses verwirklicht.

Wie angedeutet, stellen Korrosionsschutzmaßnahmen einen wichtigen Beitrag dar, um die Sicherheit von insbesondere statisch wirksamen Anschlüssen separater Bauteile gewährleisten zu können. Die Verwendung eines Korrosionsschutzelementes mit einem oder mehreren der zuvor beschriebenen Merkmalen stellt überraschenderweise eine besonders effektive Möglichkeit dar, einen entsprechenden Korrosionsschutz realisieren zu können, und zwar über die gesamte Nutzungsdauer des Anschlusses.

Eine Herstellung eines Bauteilanschlusses mit einem vorschlagsgemäßen Korrosionsschutzelement kann die folgenden Schritte umfassen:
- Einführen eines Ankers eines ersten Bauteils in eine Ausnehmung eines Lagers eines zweiten Bauteils,
- Einführen des Ankers in eine Ausnehmung des Korrosionsschutzelements,
- Schaffung einer zugfesten Verbindung zwischen dem ersten und dem zweiten Bauteil mittels Befestigungselement,
- Einbringen des Schutzmittels durch einen Injektionskanal des Korrosionsschutzelements in einen Zwischenraum.

Dass Einbringen des Schutzmittels nach dem Schaffen der zugfesten Verbindung ist von Vorteil, da die Ausprägung des Zwischenraums im Wesentlichen definiert ist, umfassend unter anderem einen Frei- beziehungsweise Hohlraum zwischen dem Korrosionsschutzelement und dem Anker, einen Hohlraum zwischen dem Anker und dem Fundament und / oder einen Hohlraum zwischen den separaten Bauteilen.

Im Sinne einer Kontrolle kann vorgesehen sein, dass nach dem Einbringen des Schutzmittels das Befestigungsmittel ein weiteres Mal betätigt wird, und somit die Festigkeit einer vorgesehenen zugfesten Verbindung gewährleistet wird.

In einer Abwandlung der Anschlussanordnung und des Herstellungsverfahrens kann vorgesehen sein, dass zunächst der Anker in eine Ausnehmung des Korrosionsschutzelements eingeführt wird und anschließend das Lager aufgesetzt wird, so dass ein Befestigungsmittel über das Lager auf das Korrosionsschutzelement eine Druckkraft ausübt.

Ein dritter Aspekt betrifft die Verwendung eines Korrosionsschutzelements bei einem Bauteilanschluss, bei welchem zwei Bauteile statisch wirksam miteinander verbunden sind, wobei das Korrosionsschutzelement eine Anzahl der zuvor beschriebenen Merkmale aufweist.

Ein Ausführungsbeispiel der Erfindung wird anhand der rein schematischen Darstellungen nachfolgend näher erläutert, wobei einzelne Merkmale oder eine Kombination von Merkmalen des dargestellten Ausführungsbeispiels auch unabhängig von der übrigen Ausgestaltung verwirklicht sein können. Dabei zeigt
- Fig. 1a, b: perspektivische Ansichten von schräg oben auf den Zwischenraum eines Anschlusses zweier separater Bauteile,
- Fig. 2, 3: perspektivische Ansichten von schräg oben auf ein Ausführungsbeispiel eines Korrosionsschutzelements in einem Bauteilanschluss,
- Fig. 4: einen Querschnitt des Ausführungsbeispiels aus Fig. 2 und 3,
- Fig. 5, 6: perspektivische Ansichten von schräg oben auf ein weiteres Ausführungsbeispiel eines Korrosionsschutzelements,
- Fig. 7: einen Querschnitt eines dritten Ausführungsbeispiels, und
- Fig. 8: einen Vertikalschnitt durch ein weiteres Ausführungsbeispiel eines Korrosionsschutzelements in einem Bauteilanschluss.

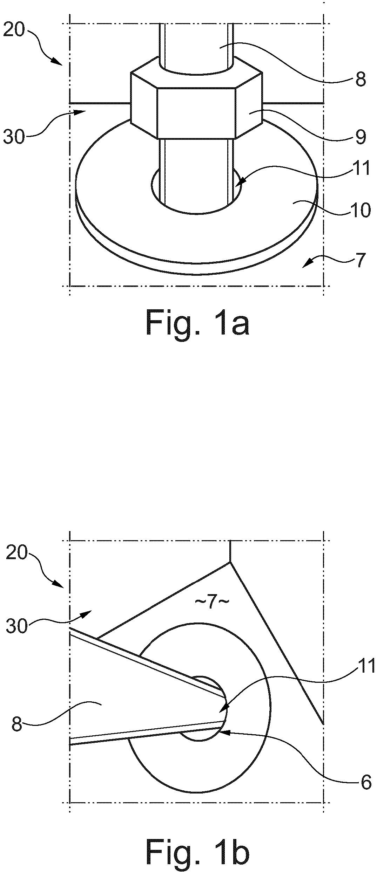

Fig.1a und Fig. 1b zeigen perspektivische Ansichten von schräg oben eines Anschlusses 20 zweier separater Bauteile, und zwar dem Lager eines Stahlschornsteins 30, vorliegend in Gestalt einer sogenannten Lastverteilungsplatte 7, und einer in einem Betonfundament als Anker einbetonierten Gewindestange 8. Die Lastverteilungsplatte 7 weist eine Ausnehmung 6 auf, durch die die Gewindestange 8 geführt ist, derart, dass die Gewindestange 8 umfangmäßig von der Lastverteilungsplatte 7 umgeben ist. Montagebedingt ist unter anderem zwischen der Gewindestange 8 und der die Ausnehmung 6 bildenden Wandung der Lastverteilungsplatte 7 ein Zwischenraum 11 ausgebildet, welcher eine schadhafte Korrosion des Anschlusses 20 begünstigt. Als Befestigungsmittel dient eine Mutter 9 mit Unterlegscheibe 10 zur Fixierung des Anschlusses 20. Ersichtlich ist, dass der Zwischenraum 11 im Wesentlichen erst nach dem Lösen der Mutter 9 und insbesondere nach einem Anheben der Unterlegscheibe 10 hinreichend für eine Revision zugänglich ist.

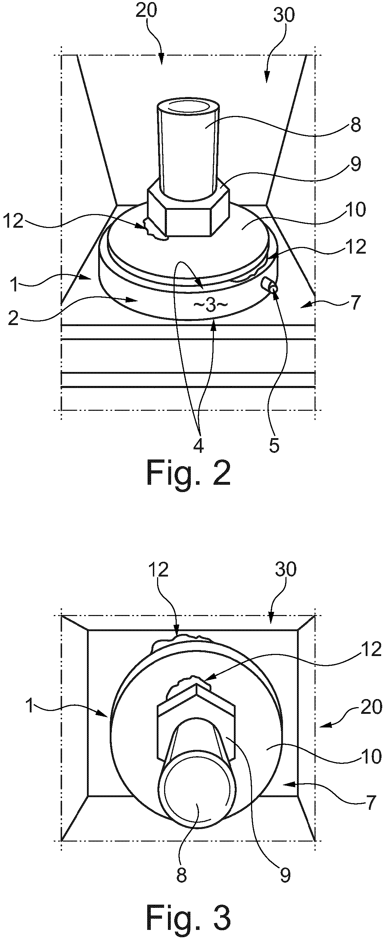

Ein Ausführungsbeispiel der Erfindung in einer perspektivischen Ansicht zeigen die Fig. 2 und 3. Dargestellt ist ein Korrosionsschutzelement 1 in Gestalt einer Druckhülse 2, wobei die eine Auflagefläche 4 einer Unterlegscheibe 10 anliegt und die andere Auflagefläche 4 der Lastverteilungsplatte 7 eines Stahlschornsteins 30. In der äußeren Mantelfläche 3 der Druckhülse 2 ist ein Schmierstutzen 5 angeordnet, welcher wahlweise lösbar mit der Druckhülse 2 verbunden ist. Aus Darstellungsgründen nicht sichtbar ist der sich radial erstreckende Injektionskanal 16, welcher den Einlass 15 mit dem Auslass 14 verbindet. Herstellungstechnisch vorteilhaft bildet eine Durchgangsbohrung den Injektionskanal 16.

Vorliegend ist der Schmierstutzen 5 im Einlass 15 angeordnet und erweitert den Injektionskanal 16 in radialer Richtung. Durch den Auslass 14 mündet der Injektionskanal 16 im Zwischenraum 11, wobei der Zwischenraum 11 einerseits durch die Gewindestange 8 und andererseits Im Wesentlichen durch eine Ausnehmung 6 der Lastverteilungsplatte 7, eine Ausnehmung 6 der Druckhülse 2, eine Ausnehmung 6 der Unterlegscheibe 10 sowie durch die Gewindegänge der Mutter 9 begrenzt ist.

Die Schutzmittelversorgung erfolgt durch Ansetzen einer Fettpresse am Schmierstutzen 5 zur Befüllung des Zwischenraums 11. In Fig. 2 und 3 sind mehrere Schutzmittelaustritte 12 erkennbar, welche die weitestgehende Füllung des Zwischenraums 11 signalisieren. Ein Rückschlagventil im Schmierstutzen 5 jedoch verhindert - aus Darstellungsgründen nicht sichtbar, dass Schutzmittel nicht unbeabsichtigt aus dem Zwischenraum 11 über den Injektionskanal 16 austreten kann.

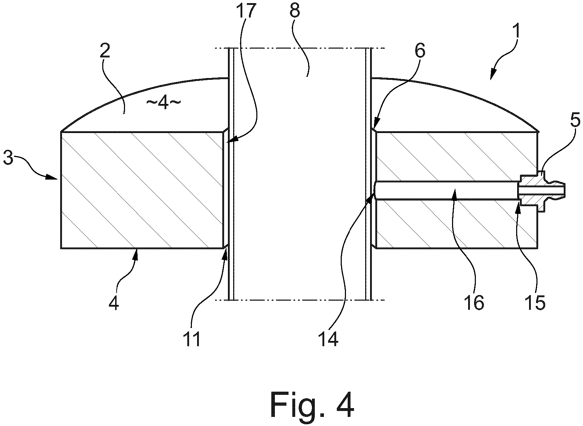

In Fig. 4 ist ein Querschnitt des Ausführungsbeispiels aus den Fig. 2 und 3 zu sehen. Der Elementkörper des Korrosionsschutzelements 1 weist eine Ausnehmung 6 auf, welche durch die als Innenfläche 17 bezeichnete Wandung des Elementkörpers geschaffen ist. Die Ausnehmung 6 umgibt die Gewindestange 8 vollumfänglich. Ein Auslass 14 mündet in der Ausnehmung 6 und ist für ein Schutzmittel durchströmungswirksam durch einen Injektionskanal 16 mit einem Einlass 15 verbunden. Am Einlass 15 ist ein Schmierstutzen 5 angeordnet, welcher den Injektionskanal 16 verlängert.

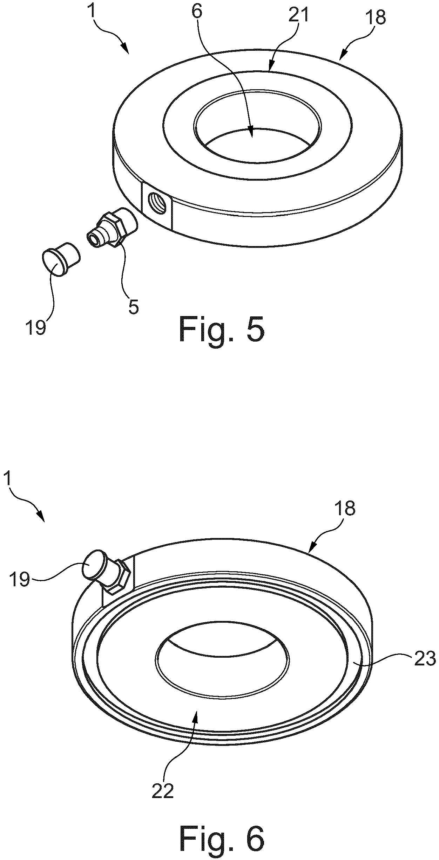

Ein weiteres Ausführungsbeispiel eines Korrosionsschutzelements 1 zeigen die Fig. 5 und 6 jeweils in perspektivischer Ansicht von schräg oben. Auf der Oberseite 21 der in Fig. 5 dargestellten Außenfläche 18 ist eine ebene Anlagefläche für das Befestigungselement ausgebildet, beispielsweise eine Mutter 9, um eine möglichst vollflächige Anlage des Befestigungselements an das Korrosionsschutzelement 1, und damit eine möglichst großflächige Kraftübertragung, verwirklichen zu können. Eine Kappe 19 ist vorgesehen, um den Schmierstutzen 5 in Ruhephasen abdecken zu können, das heißt in Phasen, in welchen kein Schutzmittel zugeführt wird, sodass Verunreinigungen nicht unbeabsichtigt in den Injektionskanal 16 gelangen können.

In Fig. 6 ist auf der Unterseite 22 der Außenfläche 18 des Korrosionsschutzelements 1 eine ringartige Nut 23 erkennbar, welche gefüllt mit einem Schutzmittel innerhalb eines Anschlusses 20 eine zusätzliche Barriere schafft. Aus Darstellungsgründen nicht eingezeichnet ist ein Versorgungskanal, welcher die Nut 23 schutzmitteldurchströmungswirksam mit dem Zwischenraum 11 verbindet.

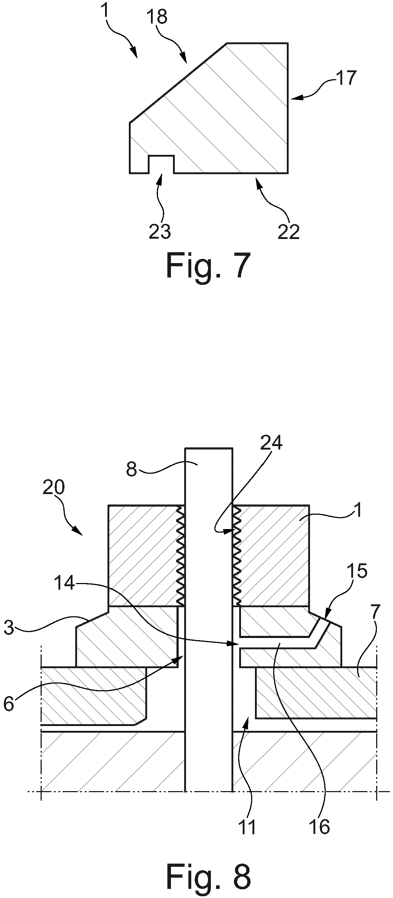

Fig. 7 zeigt ein drittes Ausführungsbeispiel eines Korrosionsschutzelements 1 im Querschnitt. Erkennbar ist, dass die Außenfläche 18 eine konische Ausschnittsfläche aufweist, um etwaige Medien abführen zu können. An der Unterseite 22 ist ein Nut 23 angeordnet zur Aufnahme eines Schutzmittels.

Fig. 8 zeigt einen Vertikalschnitt durch ein weiteres Ausführungsbeispiel eines Korrosionsschutzelements 1 in einem Anschluss 20.

Zu sehen ist ein Korrosionsschutzelement 1 mit einem oberen Abschnitt und mit einem unteren Abschnitt des Elementkörpers. Der obere Abschnitt weist ein Innengewinde 24 auf, welches in Eingriff steht mit dem Außengewinde der Gewindestange 8 des Anschlusses 20. Somit bildet das Korrosionsschutzelement 1 ein Befestigungselement des Anschlusses 20 aus. Der untere Abschnitt des Elementkörpers ist konisch ausgestaltet und weist den Injektionskanal 16 auf, wobei der Einlass 15 in der konischen äußeren Mantelfläche 3 angeordnet ist und sich der Injektionskanal 16 von dem Einlass 15 bis zum Auslass 14 in der Ausnehmung 6 erstreckt. Der untere Abschnitt liegt unmittelbar einer Lastverteilungsplatte 7 des Anschlusses 20 auf.

Zur Herstellung des Anschlusses 20 wird das Korrosionsschutzelement 1 zunächst aufgeschraubt bis eine beabsichtigte Spannkraft erreicht ist. Anschließend wird über dasselbe Korrosionsschutzelement 1 ein Schutzmittel in den Zwischenraum 11 injiziert. Ein zusätzliches Bauteil ist nicht erforderlich, was zum einen den notwendigen Bauraum für den Anschluss 20 und zum anderen die Kosten reduziert.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichen:

- 1: Korrosionsschutzelement
- 2: Druckhülse
- 3: Äußere Mantelfläche
- 4: Auflagefläche
- 5: Schm ierstutzen
- 6: Ausnehmung
- 7: Lastverteilungsplatte
- 8: Gewindestange
- 9: Mutter
- 10: Unterlegscheibe
- 11: Zwischenraum
- 12: Schutzmittelaustritt
- 14: Auslass
- 15: Einlass
- 16: Injektionskanal
- 17: Innenfläche
- 18: Außenfläche
- 19: Kappe
- 20: Anschluss
- 21: Oberseite
- 22: Unterseite
- 23: Nut
- 24: Innengewinde
- 30: Stahlschornstein

## Patentansprüche

1. Korrosionsschutzelement (1) für Bauteilanschlüsse (20), mit einem Elementkörper,
wobei der Elementkörper dazu konfiguriert ist, ein statisch belastbares Bauteil des Bauteilanschlusses (20) zu bilden, und wobei der Elementkörper eine Ausnehmung (6), einen Auslass (14), einen Einlass (15) und einen Injektionskanal (16) aufweist,
wobei die Ausnehmung (6) durch eine als Innenfläche (17) bezeichnete Wandung des Elementkörpers gebildet ist und dazu bestimmt ist, einen Bauteilanker zumindest abschnittsweise zu umgeben,
und wobei der Auslass (14) in der Ausnehmung (6) und der Einlass (15) außerhalb der Ausnehmung (6) in einer Außenfläche (18) des Elementkörpers mündet,
und wobei der Injektionskanal (16) den Auslass (14) mit dem Einlass (15) für ein Schutzmittel durchströmungswirksam verbindet.

2. Korrosionsschutzelement (1) nach Anspruch 1,
**dadurch gekennzeichnet,**
**dass** ein Kanalstutzen am Einlass (15) angeordnet ist, welcher den Injektionskanal (16) verlängert.

3. Korrosionsschutzelement (1) nach Anspruch 2,
**dadurch gekennzeichnet,**
**dass** der Kanalstutzen ein Rückschlagventil aufweist.

4. Korrosionsschutzelement (1) nach Anspruch 2 oder 3,
**dadurch gekennzeichnet,**
**dass** der Kanalstutzen als Schmierstutzen (5) ausgestaltet ist.

5. Korrosionsschutzelement (1) nach einem der vorhergehenden Ansprüche,
**gekennzeichnet durch**
ein Innengewinde in der Innenfläche (17), welches dazu bestimmt ist, mit einem korrespondierenden Gewinde eines Bauteilankers in Eingriff gebracht zu werden.

6. Korrosionsschutzelement (1) nach einem der vorhergehenden Ansprüche,
**dadurch gekennzeichnet,**
**dass** die Außenfläche (18) des Elementkörpers zumindest abschnittsweise konisch ausgestaltet ist.

7. Korrosionsschutzelement (1) nach einem der vorhergehenden Ansprüche,
**dadurch gekennzeichnet,**
**dass** die Außenfläche (18) des Elementkörpers eine Ober- und eine Unterseite (21, 22) aufweist,
und **dass** der Elementkörper eine Anzahl Nuten (23) aufweist, welche sich in die Ober- und / oder Unterseite (21, 22) öffnet,
wobei jeweils ein Versorgungskanal schutzmitteldurchströmungswirksam in die Anzahl Nuten (23) mündet.

8. Anschlussanordnung eines Bauteilanschlusses (20) zur Verbindung und/oder Verankerung separater Bauteile,
mit einem ersten Bauteil, welches kraftübertragungswirksam mit einem Anker verbunden ist,
mit einem zweiten Bauteil, welches ein Lager mit einer Ausnehmung (6) aufweist,
wobei die Ausnehmung (6) den Anker zumindest abschnittsweise umgibt,
und mit einem Befestigungselement, welches eine zugfeste Verbindung schafft zwischen dem ersten und dem zweiten Bauteil,
**dadurch gekennzeichnet,**
**dass** ein Korrosionsschutzelement (1) nach einem der vorhergehenden Ansprüche dem Lager anliegend angeordnet ist.

9. Anschlussanordnung nach Anspruch 8,
**dadurch gekennzeichnet,**
**dass** das Korrosionsschutzelement (1) zwischen dem Befestigungselement und dem Lager angeordnet ist.

10. Anschlussanordnung nach Anspruch 8 oder 9,
**dadurch gekennzeichnet,**
**dass** ein Zwischenraum (11) mit einem Schutzmittel im Wesentlichen gefüllt ist.

11. Verwendung eines Korrosionsschutzelements bei einem Bauteilanschluss (20),
bei welchem zwei Bauteile statisch wirksam miteinander verbunden sind,
**dadurch gekennzeichnet,**
**dass** das Korrosionsschutzelement (1) nach einem der Ansprüche 1 bis 7 ausgestaltet ist.
